# EUROPEAN PATENT SPECIFICATION

(11) **EP 1 563 339 B1**
(45) Date of publication and mention of the grant of the patent: **11.04.2007**
(21) Application number: 03786886.6
(22) Date of filing: 18.11.2003
(51) Int. Cl.: G02F 1/065

(54) **ELECTRO-OPTIC POLYMER WAVEGUIDE DEVICES**
ELEKTROOPTISCHE POLYMER-WELLENLEITERVORRICHTUNGEN
GUIDES D'ONDES POLYMERES ELECTRO-OPTIQUES

(30) Priority: 19.11.2002 US 299155; 14.01.2003 US 341828; 20.02.2003 US 370785; 04.08.2003 US 633955
(43) Date of publication of application: 17.08.2005
(73) Proprietor: Lumera Corporation, Bothell, WA 98011-3008 (US)
(72) Inventor: BINTZ, Louis, J., Bothell, WA 89011 (US); DINU, Raluca, Redmond, WA 98052 (US); JIN, Danliang, Bothell, WA 98021 (US)
(74) Representative: Vossius & Partner
(86) International application number: PCT/US2003/037027
(87) International publication number: WO 2004/046797

(56) References cited:
- US-A- 4 749 245
- US-A- 5 170 461
- US-A- 5 861 976
- CHON J C ET AL: "LASER ABLATION OF NONLINEAR-OPTICAL POLYMERS TO DEFINE LOW-LOSS OPTICAL CHANNEL WAVEGUIDES" OPTICS LETTERS, OPTICAL SOCIETY OF AMERICA, WASHINGTON, US, vol. 19, no. 22, 15 November 1994 (1994-11-15), pages 1840-1842, XP000475130 ISSN: 0146-9592
- OH M-C ET AL: "ELECTRO-OPTIC POLYMER MODULATORS FOR 1.55 MUM WAVELENGHT USING PHENYTETRAENE BRIDGED CHROMOPHORE IN POLYCARBONATE" APPLIED PHYSICS LETTERS, AMERICAN INSTITUTE OF PHYSICS. NEW YORK, US, vol. 76, no. 24, 12 June 2000 (2000-06-12), pages 3525-3527, XP000950449 ISSN: 0003-6951 cited in the application
- QUE W, KAM C H: "Sol-gel fabrication and properties of optical channel waveguides and gratings made from composites of titania and organically modified silane" OPTICAL ENGENEERING, vol. 41, no. 7, July 2002 (2002-07), pages 1733-1737, XP002275317 Bellingham (USA)
- LIU J ET AL: "EMBOSSED BRAGG GRATINGS BASED ON ORGANICALLY MODIFIED SILANE WAVEGUIDES IN INP" APPLIED OPTICS, OPTICAL SOCIETY OF AMERICA,WASHINGTON, US, vol. 39, no. 27, 20 September 2000 (2000-09-20), pages 4942-4945, XP000968608 ISSN: 0003-6935
- JIN D ET AL: "Material development and processing for electro-optic device systems" ORGANIC PHOTONIC MATERIALS AND DEVICES V - PROCEEDINGS OF SPIE, vol. 4991, 27 - 30 January 2003, pages 610-620, XP002275318

## Description

### Background of the Invention

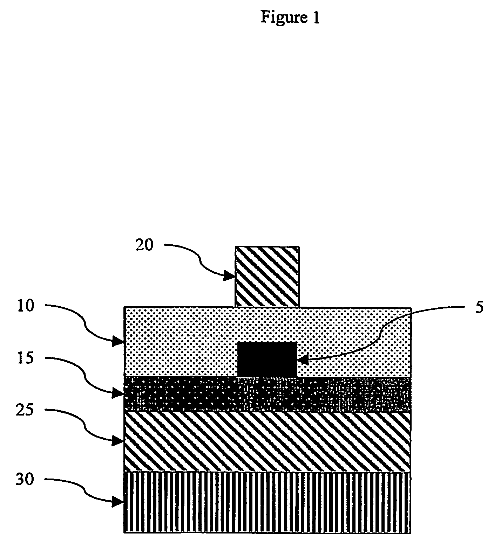

The invention relates generally to the field of electro-optic polymer waveguide devices. The art of electro-optic polymer waveguide devices and the use of organic second order nonlinear optical polymers in such devices is well documented. A typical electro-optic polymer waveguide, which is illustrated as a cross-sectional view in Figure 1, is comprised of: 1) an electro-optic polymer core (5); 2) a first polymer clad (10) overlying the electro-optic polymer core (5); 3) a second polymer clad (15) underlying the electro-optic polymer core (5); 4) a top electrode (20) overlying the first polymer clad (10); 5) a bottom electrode (25) underlying the second polymer clad (15); and 6) a substrate (30).

In a typical electro-optic polymer waveguide, the total thickness of the core, first clad, and second clad is around 6-10 µm. Typically, the refractive indices of the polymer clads are chosen to confine a great majority of the optical field in the electro-optic polymer core and keep the optical field from contacting the metal electrodes. The resulting mode in the waveguide is elliptical to such an extent that unacceptably high insertion results when the waveguide is butt-coupled to an optical fiber. The insertion loss can be reduced by using tapers to adjust the size of the fiber mode to the size of the waveguide mode. However, such tapers can be difficult to manufacture.

Making the waveguide mode less elliptical can also reduce insertion loss. A less elliptical waveguide mode can be achieved by decreasing the difference in refractive indices between the clads and electro-optic core. However, such an approach may lead to the optical field contacting one or both of the electrodes, which may cause increased optical loss or complete loss of mode confinement. Such a problem may be overcome by adding lower refractive index clads to act as barriers between the first and second clads and metal electrodes.

U.S. Patent 5,861,976 describes a thermo-optic waveguide having four cladding layers in order to reduce insertion loss while confining the mode away from the silicon substrate and metal heater strip. The first and second "core matching" cladding layers have refractive indices that are 0.0055 lower than the core, while the third and fourth cladding layers have refractive indices that are 0.0215 lower than the first and second cladding layers. The overall device thickness is around 20 µm. The insertion loss of the device is reportedly 2 dB/cm. Although the thermo-optic device showed good (i.e., low) insertion loss, such a device structure applied to electro-optic waveguides would lead to poor power performance since the electrodes are farther away from the electro-optic core than in a typical electro-optic waveguide device; the problem would be compounded since a lesser percentage of light propagates in the core relative to typical electro-optic device structures.

Proper conductivity in the clads of an electro-optic device during poling is also advantageous. It is known in the art that insulating properties of some polymers detract from their use as passive clads in electro-optic polymer modulators since some conductivity in clads is necessary during poling of the electro-optic polymer. See, for example, Grote *et al*., *Opt. Eng.,* 2001, *40(11),* 2464-2473.

The fabrication and properties of titania/organically modified silane sol-gel optical channel waveguides and gratings is discussed by Que W. and Kim H.C. in Opt. Eng. 41(7), 2002, pages 1733-1737. Liu J. *et al* describe in Appl. Opt. 39(27), 2000, pages 4942-4945 preliminary results of research toward the development of solgel-derived glass waveguide gratings made by embossing on InP.

### Summary of the Invention

An electro-optic waveguide device as defined in the claims is described that includes an electro-optic polymer core having a refractive index and an electro-optic first polymer clad in proximity to the electro-optic polymer core, wherein the refractive index of the clad is lower than the refractive index of the core and wherein a buffer clad comprises an organically modified sol-gel polymer containing silicon. The waveguide may further include, alone or in combination with each other: (a) a second polymer clad in proximity to the electro-optic polymer core, the second polymer clad having a refractive index that is lower than the refractive index of the core; (b) a first polymer buffer clad in proximity to the electro-optic first polymer clad, the first polymer buffer clad having a refractive index that is lower than the refractive index of the electro-optic first polymer clad; and (c) a second polymer buffer clad in proximity to the second polymer clad, the second polymer buffer clad having a refractive index that is lower than the refractive index of the second polymer clad.

The electro-optic first polymer clad increases the power efficiency of the device since some of the propagating mode resides in the first polymer clad. Additionally, the structure also decreases optical insertion loss since the propagating mode is both less elliptical and does not contact the metal electrodes due to the buffer clads.

At the elevated temperatures required for poling, organically modified sol-gels (e.g., organically modified titania-siloxane sol-gels) have desirable conductivity values (on the order of 10¹⁰ to 10¹¹ ohm-cm⁻¹).

Within the various embodiments of the disclosed waveguide, each layer may be deposited directly on the preceding layer so that the layers are in direct contact. Alternatively, individual pairs of layers may be separated by a thin (e.g., less than about 0.1 µm or so) adhesion promoter, surface promoter, primer layer, or the like. Layers deposited in this manner may be referred to as "in proximity to" each other. As used herein, a "buffer clad" is the outermost layer from the core of the waveguide and has a refractive index sufficiently low to keep the optical mode from contacting electrodes that would cause optical loss (e.g., gold electrodes).

Other features and advantages will be apparent from the following description of the preferred embodiments, and from the claims.

### Brief Description of the Drawings

Figure 1 illustrates a typical prior art electro-optic polymer waveguide device.
Figure 2 is a cross-sectional view of one embodiment of an electro-optic polymer waveguide device.
Figure 3 is a cross-sectional view of various electro-optic core configurations in the polymer stack.
Figure 4 is a cross-sectional view of another embodiment of an electro-optic polymer waveguide device.
Figure 5 is a graph of resistivity vs. temperature for an organically modified sol-gel used as a buffer clad.
Figure 6 is a cross-sectional view of various embodiments of an electro-optic waveguide device.

### Detailed Description

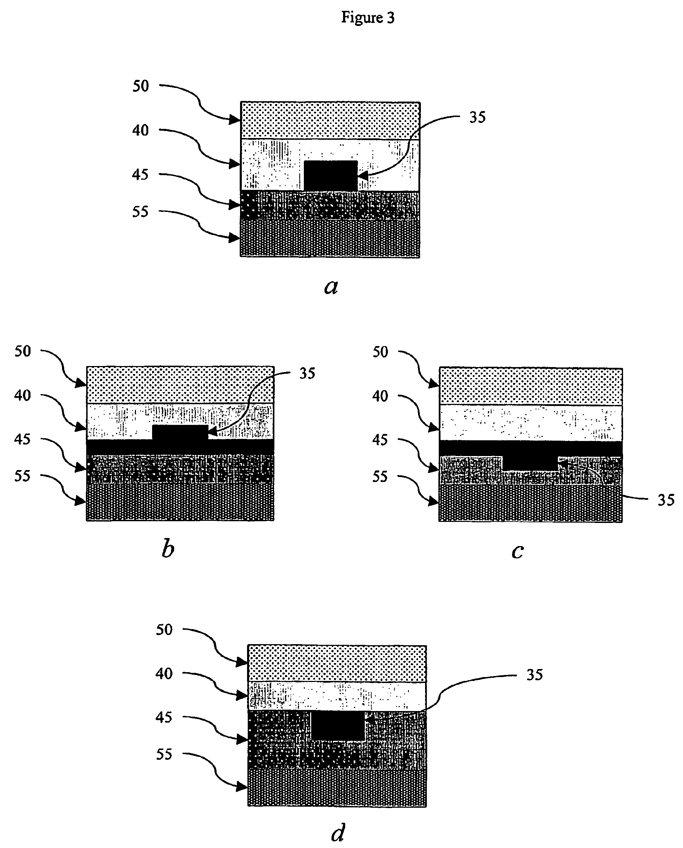

The electro-optic waveguide device includes an electro-optic polymer core. In general, an electro-optic polymer comprises a second order nonlinear optical chromophore and a polymer matrix. In some embodiments, the chromophore can be covalently attached to the polymer backbone. The electro-optic core can be poled by any one of the techniques known to those skilled in the art including corona poling, electrode poling, or push-pull poling. The electro-optic core can be shaped by reactive ion etching, laser ablation, bleaching, positive tone photolithography, negative tone photolithography, or embossing. Referring to Figure 3, the electro-optic core can be shaped as a "rib" (Figure 3a), a "quasi-rib" (Figure 3b), a "quasi-trench" (Figure 3c), or a "buried-trench" (Figure 3d). Preferably, the electro-optic device is a Mach Zehnder modulator, a directional coupler, or a micro-ring resonator.

The electro-optic waveguide device comprises an electro-optic polymer core and an electro-optic first polymer clad in proximity to the electro-optic polymer core, the electro-optic first polymer clad having a refractive index that is lower than the refractive index of the electro-optic polymer core. The electro-optic first polymer clad increases the power efficiency of the device since some of the propagating mode resides in the first polymer clad. Both the electro-optic core polymer layer and the electro-optic clad polymer layer can be formed by methods known to those skilled in the art such as spin-coating, dip-coating, brushing, and printing.

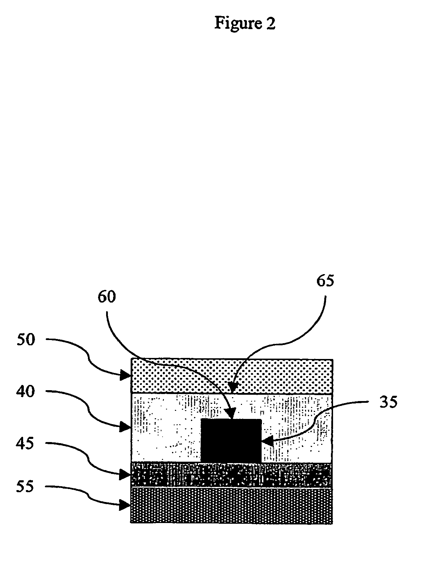

In another embodiment, the electro-optic waveguide device comprises, referring to Figure 2: 1) an electro-optic polymer core (35); 2) a first polymer clad (40) in proximity to the electro-optic polymer core, the first polymer clad having a refractive index that is lower than the refractive index of the electro-optic polymer core; 3) a second polymer clad (45) in proximity to the electro-optic polymer core, the second polymer clad having a refractive index that is lower than the refractive index of the electro-optic polymer core; 4) a first polymer buffer clad (50) in proximity to the first polymer clad, the first polymer buffer clad having a refractive index that is lower than the refractive index of the first polymer clad; and 5) a second polymer buffer clad (55) in proximity to the second polymer clad, the second polymer buffer clad having a refractive index that is lower than the refractive index of the second polymer clad. The electro-optic polymer core, first polymer clad, second polymer clad, first polymer buffer clad, and second polymer buffer clad can each be formed independently by methods known to those skilled in the art such as spin-coating, dip-coating, brushing, and printing.

The refractive index and thickness of each polymer layer is chosen so that the resulting waveguide has single mode behavior. The refractive index of each layer, thickness of each clad, and the dimensions of the core that would give single mode behavior in the resulting waveguide can be calculated using techniques and computer programs known to those skilled in the art (such as the BeamProp Version 5.0 software from Rsoft). Preferable ranges for the thickness and the refractive index of the various layers are summarized in Table 1. Preferably, referring to Figure 2, the electro-optic core (35) is shaped as a rib and has a thickness of about 2.4 - about 3.8 µm and a refractive index of about 1.54 - about 1.62, the first polymer clad (40) has a thickness between the electro-optic core surface (60) and the first polymer clad surface (65) of about 1.0 - about 3.0 µm and a refractive index of about 1.53 - about 1.61, the second polymer clad (45) has a thickness of 0 - about 3.0 µm and a refractive index of about 1.53 - about 1.61, the first polymer buffer clad (50) has a thickness of about 2.2 - about 3.2 µm and a refractive index of about 1.445 - about 1.505, and the second polymer buffer clad has a thickness of about 2.2 - about 3.2 µm and a refractive index of about 1.445 - about 1.505. The preferable ranges for refractive index, layer thickness, and core dimensions for the various layers are given below in Table 1. In the embodiments that include a second polymer clad, most preferably the clad has a minimum thickness of about 1 µm.

**Table 1**

| Layer | Thickness (µm) | Width (µm) | Refractive Index |
|---|---|---|---|
| First Polymer Buffer Clad | 2.2 - 3.2 | - | 1.445 - 1.505 |
| First Polymer Clad | 1.0 - 3.0 | - | 1.53 -1.61 |
| Core | 2.4 - 3.8 | 2.8-4.2 | 1.54-1.62 |
| Second Polymer Clad | 0 - 3.0 | - | 1.53 -1.61 |
| Second Polymer Buffer Clad | 2.2 - 3.2 | - | 1.445 - 1.505 |

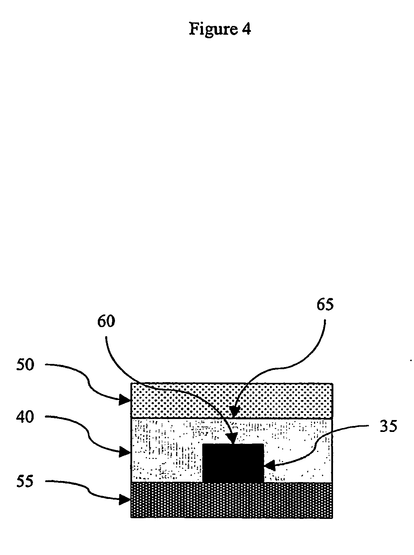

In another embodiment, the electro-optic waveguide device comprises, referring to Figure 4: 1) an electro-optic polymer core (35); 2) a first polymer clad (40) in proximity to the electro-optic polymer core, the first polymer clad having a refractive index that is lower than the refractive index of the electro-optic polymer core; 3) a first polymer buffer clad (50) in proximity to the first polymer clad, the first polymer buffer clad having a refractive index that is lower than the refractive index of the first polymer clad; and 4) a second polymer buffer clad (55) in proximity to the electro-optic polymer core, the second polymer buffer clad having a refractive index that is lower than the refractive index of the electro-optic polymer core. The electro-optic polymer core, first polymer clad, first polymer buffer clad, and second polymer buffer clad can each be formed independently by methods known to those skilled in the art such as spin-coating, dip-coating, brushing, and printing.

In these embodiments, one or more of the clads may include an electro-optic polymer. In one preferred embodiment, the first polymer clad is an electro-optic polymer. Additionally, the second polymer clad may also be an electro-optic polymer.

Preferably, one or more of the layers of the device includes a crosslinked polymer such as a radiation-cured, crosslinked acrylate polymer. In one preferred embodiment, the electro-optic polymer core is crosslinked, the first polymer clad is a crosslinked electro-optic polymer, the second polymer clad is an organically modified sol-gel polymer such as ORMOSIL, the first polymer buffer clad is a radiation-cured acrylate, and the second polymer buffer clad is an organically modified sol-gel. Crosslinkable electro-optic polymers, sol-gels, ORMOSILs, and radiation cured acrylates are known to those skilled in the art. See, for example, U.S. Patents No. 6,419,989; 6,335,149; 6,323,361; 6,306,563; 6,303,730; 6,294,573; 6,126,867; 6,022,828; 5,811,507; 5,783,319; 5,776,374; 5,635,576; 5,714;304; 5,480,687; 5,433,895; 5,223,356; and 5,120,339; *Chem. Mater.* **2000.** *12*, 1187; *J. Am. Chem Soc*. **2001**, *123,* 986; *Macromolecules* **1992,** *25*, 4032; and *Chem. Mater.* **1998*****,** 10,* 146. Preferably, the second polymer clad may comprise an organically modified titania-siloxane sol-gel.

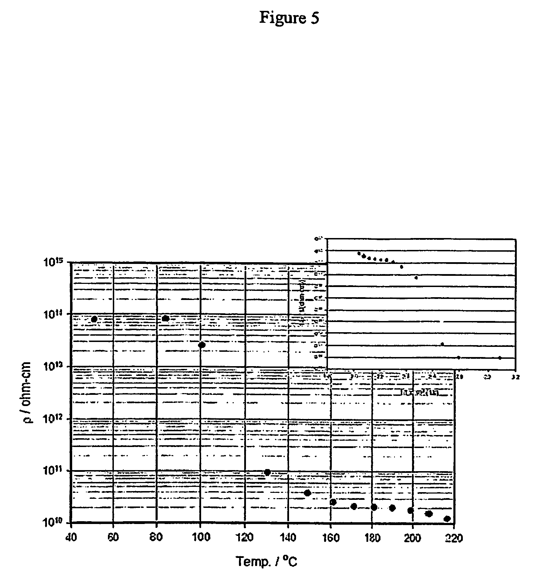

The ORMOSILs are particularly useful as buffer clads, with or without additional polymer clads, because at the elevated temperatures required for poling, they have desirable conductivity values (10¹⁰ to 10¹¹ ohm-cm⁻¹), with the transition occurring around 100°C, as shown in Fig. 5. In addition, these materials enable refractive index tunability based on their flexibility of composition. For example, replacing aliphatic groups such as methyl groups with more polarizable groups such as phenyl groups on the silicon atoms of an ORMOSIL or an organically modified titania-siloxane sol-gel will increase the refractive index. Increasing the fraction of titania will also increase the refractive index.

Thus, the electro-optic waveguide device of the invention comprises an electro-optic polymer core and a polymer buffer clad, wherein the polymer buffer clad comprises an organically modified sol gel polymer containing silicon and has a refractive index that is lower than the refractive index of the electro-optic polymer core.

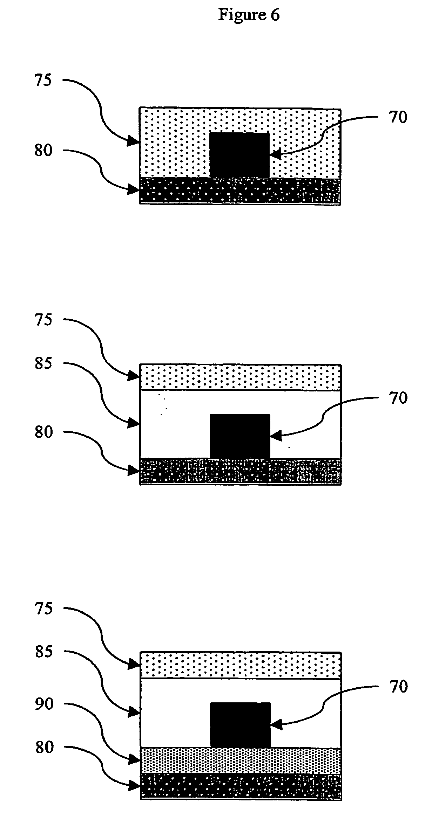

Preferably, as shown in Fig. 6, the electro-optic waveguide device comprises a first polymer buffer clad (75), an electro-optic core (70), and a second polymer buffer clad (80) wherein one polymer buffer clad comprises an organically modified sol-gel polymer containing silicon, and each of the buffer clads has a refractive index that is lower than the refractive index of the electro-optic polymer core. Suitable materials for the other polymer buffer clad include crosslinked acrylate polymers, *e.g.,* of the type described in Oh *et al., Appl. Phys. Lett.* **2000**, *76(24),* 3525-3527. The device may also further include a first polymer clad (85) between the core (70) and first buffer clad (75). The first polymer clad (85) has a refractive index that is lower than the refractive index of the core (70), but higher than the refractive index of first buffer clad (75). Preferably, the first polymer clad comprises a crosslinked acrylate polymer. The electro-optic waveguide device may further comprise a second polymer clad between the electro-optic polymer core and the second polymer clad, the second polymer clad having a refractive index that is lower than the refractive index of the electro-optic polymer core and higher than the refractive index of the second polymer buffer clad.

Preferably, in all embodiments, the electro-optic polymer core (70) comprises a crosslinked polymer. Preferably, the electro-optic waveguide device further comprises a substrate on which the polymer buffer clad comprising an organically modified sol-gel is deposited. In some embodiments, the substrate is silicon.

The optical waveguide devices described herein can be used in optical communications systems. The optical communications systems employing such modulators will be improved due to the increased power efficiency of the waveguide devices having an electro-optic polymer clad and an electro-optic polymer core. Thus, other embodiments of the invention include communications systems such as beam steering systems, phased array radars, optical routers, optical transponders, and optical satellites.

A method of fabricating a polymer waveguide comprises
(a) forming a first polymer film in proximity to a substrate, where the first polymer film comprises a nonlinear optical chromophore; (b) poling and crosslinking the first polymer film to provide a crosslinked first electro-optic polymer film; (c) forming a second polymer film comprising a nonlinear optical chromophore in proximity to the first electro-optic polymer film; and (d) poling the second polymer film to provide a second electro-optic polymer film. The substrate may comprise a polymer, an organically modified sol-gel, or an electro-optic polymer. Preferably, the second electro-optic polymer film is crosslinked. The refractive index of the second electro-optic polymer film is preferably lower than the refractive index of the first electro-optic polymer film. When the refractive index of the second electro-optic polymer film is lower than the refractive index of the first electro-optic polymer film, preferably the first electro-optic film is dry etched to form a rib or quasi rib before forming the second polymer film comprising a nonlinear optical chromophore in proximity to the first electro-optic polymer film. The dry etching step can comprise using a metal hardmask, and the metal hardmask preferably comprises titanium or platinum. The rib or quasi rib may be a Mach-Zehnder modulator, directional coupler, or micro-ring resonator. When the refractive index of the second electro-optic polymer film is lower than the refractive index of the first electro-optic polymer film, the first electro-optic polymer film may formed as a rib quasi rib, quasi-trench, or trench be methods comprising laser ablation, bleaching, positive tone photolithography, negative tone photolithography, or embossing. The substrate may comprise a crosslinked electro-optic polymer. The method of forming a polymer waveguide may further comprise (e) forming a polymer buffer clad in proximity to the second electro-optic polymer film. When the method of forming a polymer waveguide further comprises forming a polymer buffer clad in proximity to the second electro-optic polymer film, preferably the first electro-optic polymer film has a thickness of about 2.4 to about 3.8 µm and a refractive index of about 1.54 to about 1.62; the second electro-optic first polymer film has a thickness of about 1.0 to about 3.0 µm and a refractive index of about 1.53 to about 1.61; and the polymer buffer clad has a thickness of about 2.2 to about 2.8 µm and a refractive index of about 1.445 to about 1.505. Preferably, the polymer buffer clad is crosslinked. The first electro-optic polymer film may also form a trench or quasi-trench. When the first electro-optic polymer film forms a trench or quasi-trench, the substrate preferably comprises a crosslinked electro-optic polymer. Preferably, the crosslinking of the first polymer film occurs above about 160 °C. When the first polymer film is crosslinked, preferably the film may be crosslinked during poling or crosslinked before poling. The first polymer film comprising a nonlinear optical chromophore or second polymer film comprising a nonlinear optical chromophore may be formed by methods comprising spin coating, dip coating, or brushing.

In another embodiment, the refractive index of the first electro-optic polymer is lower than the refractive index of the second electro-optic polymer. When the refractive index of the first electro-optic polymer is lower than the refractive index of the second electro-optic polymer, the method may preferably further comprise (e) dry etching the second electro-optic film to form a rib or quasi rib and (f) forming a polymer buffer clad in proximity to the second electro-optic polymer film. The polymer buffer clad is preferably crosslinked. In another embodiment when the refractive index of the first electro-optic polymer is lower than the refractive index of the second electro-optic polymer, the second electro-optic polymer film may form a quasi-trench or trench. When the second electro-optic polymer film forms a quasi-trench or trench, preferably the method further comprises (e) forming a first polymer buffer clad in proximity to the second electro-optic polymer film. Preferably, the polymer buffer clad is crosslinked. When the refractive index of the first electro-optic polymer is lower than the refractive index of the second electro-optic polymer, the second electro-optic polymer film may be formed as a rib, quasi rib, quasi-trench, or trench by methods comprising laser ablation, bleaching, positive tone photolithography, negative tone photolithography, or embossing.

### Examples

The following examples are illustrative and do not limit the Claims.

The preparation of materials used in the following examples is detailed below.

### Electro-optic Polymers:

The electro-optic chromophore used in the electro-optic core and electro-optic clad was prepared by esterifying a chromophore containing free alcohol groups with the required equivalents of 4-(trifluorovinyloxy)-benzoyl chloride (the benzoyl chloride is described in U.S. Pat. 5,198,513) and a hindered amine base or pyridine.

The polymer used as a matrix for the electro-optic chromophore was prepared by reacting 1-lithio-4-trifluovinyloxybenzene with pentafluorostyrene at -78°C for 1 h followed by warming to room temperature. The resulting 2,3,5,6-fluoro-4'-trifluorovinyloxy-4-vinyl biphenyl was purified by column chromatography and polymerized with AIBN initiation in THF under N₂ atmosphere. The polymer was purified by precipitation from THF/hexanes.

### Organically Modifed Sol-Gel Polymers:

Polymer (1): an organically modified titania-siloxane sol-gel was prepared by: 1) dripping 127.2 g of titanium butoxide (from Aldrich, double distilled) into a solution of 592 g of anhydrous ethanol and 24.0 g of concentrated DCl (~37 wt%); 2) dripping 94.3 g of D₂O; 3) dripping 99.2 g of glycidoxypropyltrimethoxysilane; 4) heating at ~80°C for 12 hours; 5) dripping 372.0 g of phenyltriethoxysilane (from Aldrich, distilled) while at ~80°C for 4 hours; and 6) adding distilled 473 g of cyclohexanone into the solution and stir to homogeneity. The low boiling volatiles from the reaction were removed by rotary evaporation. Finally, 1.60 g of poly[dimethylsiloxane - co- methyl(3-hydroxypropyl) siloxane] - graft - poly(ethylene/-propylene glycol) (from Aldrich, used as received) was added into the above solution and stirred to obtain a homogeneous solution.

Polymer (2): an organically modified sol-gel was prepared by: 1) adding 156.0 g tetraethyl orthosilicate (from Aldrich, double distilled), 531.0 g glycidoxypropyltrimethoxysilane (from Aldrich, double distilled), 321.0 g cyclohexanone (from Aldrich, distilled) to a flask; 2) dripping a solution of 187.5 g D₂O and 7.50 g 2M DCl; and 3) heating at 80-100°C for 5 hours.

Polymer (3): an organically modified sol-gel was prepared by 1) adding 17.83 g methyltriethoxysilane (from Aldrich, double distilled), 70.80 g glycidoxypropyltrimethoxysilane (from Aldrich, double distilled), 64.2 g cyclohexanone (from Aldrich, distilled) to a flask; 2) dripping a solution of 21.78 g D₂O and 2.050 g 2M DCl; and 3) heating at 80-100°C for 5 hours.

### Crosslinkable Acrylate Polymers:

Polymer (4): a crosslinkable acrylate polymer was prepared by: 1) stirring 20.0 g of pentaerythritol tetraacrylate (Aldrich, used as received) and 20.0 g tri(ethylene glycol) dimethacrylate (Aldrich, used as received); 2) adding 1.2 g of 2-methyl-4'-(methylthio)-2-morpholinopropiophenone and stirring until dissolution; and 3) refrigerating the resulting solution.

Polymer (5): another crosslinkable acrylate polymer was prepared by: 1) adding to a two-liter flask with mechanical stirring 400.0 g Bisphenol A glycerolate diacrylate (Aldrich, used as received), 70.4 g tri(ethylene glycol) dimethacrylate (Aldrich, used as received), and 552 g 2-ethoxyethanol (Aldrich, distilled), and stirring either overnight or for 12 hours to obtain a homogeneous solution; and 2) introducing 4.704 g 2-methyl-4'-(methylthio)-2-morpholinopropiophenone into the solution, and stirring to effect complete dissolution.

### Example 1

The device in this example was fabricated using a gold covered SiO₂ 6-inch wafer as a substrate. The refractive indices reported are measured at 1550 nm.

An adhesion promoter for the second polymer buffer clad and gold was prepared by: 1) heating 100.0 g of isopropyl alcohol (from Aldrich), 2.0 g of H₂O, 5.0 g of mercapto-propyltriethoxysilane (from Sigma, distilled) and 5.0 g of mercaptopropylmethyl-dimethoxysilane, and two drops of 37% HCl at reflux for 2 hours; 2) allowing the solution cool down to room temperature; 3) adding 504 g of isopropyl alcohol to the above solution and stirring. The adhesion promoter was applied to the gold surface by spin depositing a 1% solution at 500 rpm for 2 seconds and 4500 rpm for 30 seconds.

The second polymer buffer clad (Polymer (2)) was spin deposited as a 36.1% (by weight) solution in cyclopentanone at 300 rpm for 12 seconds and 1050 rpm for 20 seconds. The wafer layer was cured by heating under 50 Torr of vacuum at 100°C for 60 min (heating rate of 0.5°C/min), 150°C for 60 min (heating rate of 3°C/min), and 200°C for 30 min (heating rate of 5°C/min), and cooling the wafer to ambient temperature at a cooling rate of 0.5°C/min. The thickness of the layer is 2.9 µm and the refractive index is 1.475.

The second polymer clad (Polymer (1)) was spin deposited on the second polymer buffer clad as a 38% (by weight) solution in cyclohexanone at 500 rpm for 5 seconds and 2900 rpm for 30 seconds. The clad was cured by heating under 50 Torr of vacuum at 100°C for 60 min (heating rate of 0.5°C/min), 150 °C for 60 min (heating rate of 3°C/min), and 190°C for 90 min (heating rate of 5°C/min), and cooling the wafer to ambient temperature at a cooling rate of 0.5°C/min. The thickness of the layer was 1.9 µm and the refractive index was 1.545.

An adhesion promoter layer was applied to the second polymer clad by spin depositing a 1% (by weight) solution of (*N*-(2-aminoethyl)-3-aminopropylmethyldimethoxysilane) in isopropyl alcohol at 500 rpm for 5 sec and 3000 rpm for 30 sec. The wafer was then heated on a hot plate at 100°C for 5 min.

The polymer used for the electro-optic core was spin deposited on the second polymer clad as a 30% (by total solids weight) solution of the electro-optic chromophore in the polymer matrix (the chromophore concentration with respect to the crosslinkable polymer was 25% by weight) in cyclopentanone at 300 rpm for 2 sec then 500 rpm for 5 sec, then 1000 rpm for 20 sec. The film was precured by heating at 80°C on a hot plate for 10 min, heating at 70°C at 1 mTorr for 480 min. The film was corona poled and crosslinked by applying a voltage of 4.5 kV to the wafer while heating to 180°C over 10 min, holding at 4.5 kV at 180°C for 10 min, increasing the corona voltage to 7.5 kV and holding at 180°C for 10 min, and cooling to ambient temperature over 25 min. Heating at 180°C was necessary to affect the desired amount of crosslinking. The thickness of the layer was 3.0 µm and the refractive index was 1.565.

The electro-optic polymer core was formed as a rib using a hardmask and dry etching as described in WO2004031863. The electro-optic polymer core was formed as a Mach-Zehnder Modulator.

The polymer used for the electro-optic first polymer clad was spin deposited on the electro-optic core and the second polymer clad as a 23% (by total solids weight) solution of the electro-optic chromophore in the polymer matrix (the chromophore concentration with respect to the crosslinkable polymer was 21% by weight) in cyclopentanone at 300 rpm for 2 sec then 500 rpm for 5 sec, then 1400 rpm for 20 sec. The film was precured by heating at 50°C on a hot plate for 10 min., followed by heating at 25 Torr for 8 h at 50°C. The film was corona poled and crosslinked by applying a voltage of 7.5 kV to the wafer while heating at 180°C for 20 min. The thickness of the layer was 1.2 µm and the refractive index was 1.55.

The first polymer buffer clad (Polymer (4)) was spin deposited on the electro-optic first polymer clad as a liquid at 500 rpm for 5 seconds and 1800 rpm for 40 seconds. The wafer was then exposed to UV radiation until the film was hardened. The thickness of the layer was 3.1 µm and the refractive index was 1.495.

The surface of the first polymer buffer clad was treated with oxygen/neon plasma for 7 min. in order to promote adhesion of a gold layer. The gold layer was deposited and the gold electrode was defined over one arm of the Mach-Zehnder modulator by photolithography and wet etching. The wafer was diced into individual Mach-Zehnder electro-optic devices.

### Example 2

The device in this example was fabricated using a gold-covered SiO₂, 6-inch wafer as a substrate. The second polymer buffer clad, second polymer clad, and the electro-optic polymer core were the same as those used in Example 1. The refractive indices reported are measured at 1550 nm.

The electro-optic polymer core was formed as a rib using a hardmask and dry etching as described in WO2004031863. The electro-optic polymer core was formed as a Mach-Zehnder modulator.

The surface of the stack was treated with oxygen plasma for 1 min. in a DRIE at a working pressure of 230 mTorr to promote adhesion of the subsequently deposited first polymer buffer clad.

A 24% by weight solution of the first polymer clad (Polymer (5)) was spin deposited at 300 rpm for 30 sec and 1000 rpm for 20 sec. The film was dried at 50°C at 1 mTorr for 1 hour, and then exposed to ultraviolet radiation until the film was hardened. The thickness of the layer was 2 µm and the refractive index was 1.543.

The surface of the first polymer clad was treated with an oxygen/neon plasma in a DRIE at a working pressure of 20 mTorr for 5 min. to promote adhesion of the first polymer buffer clad. The first polymer buffer clad and top electrode were the same as those provided in Example 1, and were deposited using the procedure described in Example 1.

Other embodiments are within the following claims.

## Claims

1. An electro-optic waveguide device, comprising (a) an electro-optic polymer core (35, 70) having a refractive index and (b) a polymer buffer clad (55, 80) having a refractive index lower than the refractive index of the electro-optic polymer core (35, 70), **characterized in that** the polymer buffer clad (55, 80) comprises an organically modified sol-gel polymer containing silicon.

2. An electro-optic waveguide device according to claim 1, further comprising: (c) a further polymer buffer clad (50, 75) having a refractive index that is lower than the refractive index of the electro-optic polymer core (35, 70).

3. The electro-optic waveguide device of claim 2, wherein the further polymer buffer clad (50, 75) comprises a crosslinked acrylate polymer.

4. The electro-optic waveguide device of claim 2, further comprising a first polymer clad (40, 85) between the electro-optic polymer core (35, 70) and said further polymer buffer clad (50, 75), the first polymer clad (40, 85) having a refractive index lower than the refractive index of the electro-optic polymer core (35, 70) and higher than the refractive index of said further polymer buffer clad (50, 75).

5. The electro-optic waveguide device of claim 4, wherein the first polymer clad (40, 85) comprises a crosslinked acrylate polymer.

6. The electro-optic waveguide device of claim 4, wherein (a) said further polymer buffer clad (50, 75) has a thickness of about 2.2 to about 3.2 µm and a refractive index of about 1.445 to about 1.505; (b) the first polymer clad (40, 85) has a thickness of about 1.0 to about 3.0 µm and a refractive index of about 1.53 to about 1.61; (c) the electro-optic polymer core (35, 70) has a thickness of about 2.4 to about 3.8 µm and a refractive index of about 1.54 to about 1.62; and (d) said polymer buffer clad (55, 80) has a thickness of about 2.2 to about 3.2 µm and a refractive index of about 1.445 to about 1.505.

7. The electro-optic waveguide device of claim 4, further comprising a second polymer clad (45, 90) between the electro-optic polymer core (35, 70) and said polymer buffer clad (55, 80), the second polymer clad (45) having a refractive index that is lower than the refractive index of the electro-optic polymer core (35, 70) and higher than the refractive index of said polymer buffer clad (55, 80).

8. The electro-optic waveguide device of claim 7, wherein (a) said further polymer buffer clad (50, 75) has a thickness of about 2.2 to about 3.2 µm and a refractive index of about 1.445 to about 1.505; (b) the first polymer clad (40, 85) has a thickness of about 1.0 to about 3.0 µm and refractive index of about 1.53 to about 1.61; (c) the electro-optic polymer core (35, 70) has a thickness of about 2.4 to about 3.8 µm and a refractive index of about 1.54 to about 1.62; (d) the second polymer clad (45, 90) has a thickness of about 1.0 to about 3.0 µm and a refractive index of about 1.53 to about 1.61; and (e) said polymer buffer clad (55, 80) has a thickness of about 2.2 to about 3.2 µm and a refractive index of about 1.445 to about 1.505.

9. The electro-optic waveguide device of claims 1 or 2, wherein the electro-optic polymer core (35, 70) comprises a crosslinked polymer.

10. The electro-optic waveguide device of claims 1 or 2, further comprising a substrate on which said polymer buffer clad (55, 80) comprising an organically modified sol-gel polymer containing silicon is deposited.

11. The electro-optic waveguide device of claim 7, wherein the second polymer clad (45, 90) comprises an organically modified sol-gel polymer containing silicon.

12. The electro-optic waveguide device of claim 7, wherein the second polymer clad (45, 90) comprises an organically modified titania-siloxane sol-gel polymer.

## Patentansprüche

1. Elektro-optische Wellenleitervorrichtung mit:
(a) einem elektro-optischen Polymerkern (35,70) mit einem Brechungsindex und
(b) einem Polymerpuffermantel (55,80) mit einem Brechungsindex, der niedriger ist als der Brechungsindex des elektro-optischen Polymerkerns (35,70),
**dadurch gekennzeichnet, daß** der Polymerpuffermantel (55,80) ein organisch modifiziertes siliziumhaltiges Sol-Gel-Polymer aufweist.

2. Elektro-optische Wellenleitervorrichtung nach Anspruch 1, ferner mit (c) einem weiteren Polymerpuffermantel (50,75) mit einem Brechungsindex, der niedriger ist als der Brechungsindex des elektro-optischen Polymerkerns (35,70).

3. Elektro-optische Wellenleitervorrichtung nach Anspruch 2, wobei der weitere Polymerpuffermantel (50,75) ein vernetztes Acrylatpolymer aufweist.

4. Elektro-optische Wellenleitervorrichtung nach Anspruch 2, ferner mit einem ersten Polymermantel (40,85) zwischen dem elektro-optischen Polymerkern (35,70) und dem weiteren Polymerpuffermantel (50,75), wobei der erste Polymermantel (40,85) einen Brechungsindex aufweist, der niedriger ist als der Brechungsindex des elektro-optischen Polymerkerns (35,70) und höher ist als der Brechungsindex des weiteren Polymerpuffermantels (50,75).

5. Elektro-optische Wellenleitervorrichtung nach Anspruch 4, wobei der erste Polymermantel (40,85) ein vernetztes Acrylatpolymer aufweist.

6. Elektro-optische Wellenleitervorrichtung nach Anspruch 4, wobei
(a) der weitere Polymermantel (50,75) eine Dicke von ungefähr 2,2 bis ungefähr 3,2 µm und einen Brechungsindex von ungefähr 1,445 bis ungefähr 1,505 aufweist;
(b) der erste Polymermantel (40,85) eine Dicke von ungefähr 1,0 bis ungefähr 3,0 µm und einen Brechungsindex von ungefähr 1,53 bis ungefähr 1,61 aufweist;
(c) der elektro-optische Polymerkern (35,70) eine Dicke von ungefähr 2,4 bis ungefähr 3,8 µm und einen Brechungsindex von ungefähr 1,54 bis ungefähr 1,62 aufweist; und
(d) der Polymerpuffermantel (55,80) eine Dicke von ungefähr 2,2 bis ungefähr 3,2 µm und einen Brechungsindex von ungefähr 1,445 bis ungefähr 1,505 aufweist.

7. Elektro-optische Wellenleitervorrichtung nach Anspruch 4, ferner mit einem zweiten Polymermantel (45,90) zwischen dem elektro-optischen Polymerkern (35,70) und dem Polymerpuffermantel (55,80), wobei der zweite Polymermantel (45) einen Brechungsindex aufweist, der niedriger ist als der Brechungsindex des elektro-optischen Polymerkerns (35,70) und höher ist als der Brechungsindex des Polymerpuffermantels (55,80).

8. Elektro-optische Wellenleitervorrichtung nach Anspruch 7, wobei
(a) der weitere Polymermantel (50,75) eine Dicke von ungefähr 2,2 bis ungefähr 3,2 µm und einen Brechungsindex von ungefähr 1,445 bis ungefähr 1,505 aufweist;
(b) der erste Polymermantel (40,85) eine Dicke von ungefähr 1,0 bis ungefähr 3,0 µm und einen Brechungsindex von ungefähr 1,53 bis ungefähr 1,61 aufweist;
(c) der elektro-optische Polymerkern (35,70) eine Dicke von ungefähr 2,4 bis ungefähr 3,8 µm und einen Brechungsindex von ungefähr 1,54 bis ungefähr 1,62 aufweist;
(d) der zweite Polymermantel (45,90) eine Dicke von ungefähr 1,0 bis ungefähr 3,0 µm und einen Brechungsindex von ungefähr 1,53 bis ungefähr 1,61 aufweist; und
(e) der Polymerpuffermantel (55,80) eine Dicke von ungefähr 2,2 bis ungefähr 3,2 µm und einen Brechungsindex von ungefähr 1,445 bis ungefähr 1,505 aufweist.

9. Elektro-optische Wellenleitervorrichtung nach Anspruch 1 oder 2, wobei der elektro-optische Polymerkern (35, 70) ein vernetztes Polymer aufweist.

10. Elektro-optische Wellenleitervorrichtung nach Anspruch 1 oder 2, ferner mit einem Substrat, auf welchem der Polymerpuffermantel (55,80), der ein organisch modifiziertes silizium-haltiges Sol-Gel-Polymer aufweist, angeordnet ist.

11. Elektro-optische Wellenleitervorrichtung nach Anspruch 7, wobei der zweite Polymermantel (45,90) ein organisch modifiziertes siliziumhaltiges Sol-Gel-Polymer aufweist.

12. Elektro-optische Wellenleitervorrichtung nach Anspruch 7, wobei der zweite Polymermantel (45,90) ein organisch modifiziertes Titandioxid-Siloxan-Sol-Gel-Polymer aufweist.

## Revendications

1. Dispositif de guide d'onde électro-optique, comprenant (a) un noyau de polymère électro-optique (35, 70) ayant un indice de réfraction et (b) un revêtement d'amortissement en polymère (55, 80) ayant un indice de réfraction inférieur à l'indice de réfraction du noyau de polymère électro-optique (35, 70), **caractérisé en ce que** le revêtement d'amortissement en polymère (55, 80) comprend un polymère sol-gel organiquement modifié contenant du silicium.

2. Dispositif de guide d'onde électro-optique selon la revendication 1, comprenant en outre : (c) un autre revêtement d'amortissement en polymère (50, 75) ayant un indice de réfraction qui est inférieur à l'indice de réfraction du noyau de polymère électro-optique (35, 70).

3. Dispositif de guide d'onde électro-optique selon la revendication 2, dans lequel l'autre revêtement d'amortissement en polymère (50, 75) comprend un polymère d'acrylate réticulé.

4. Dispositif de guide d'onde électro-optique selon la revendication 2, comprenant en outre un premier revêtement en polymère (40, 85) entre le noyau de polymère électro-optique (35, 70) et ledit autre revêtement d'amortissement en polymère (50, 75), le premier revêtement en polymère (40, 85) ayant un indice de réfraction inférieur à l'indice de réfraction du noyau de polymère électro-optique (35, 70) et supérieur à l'indice de réfraction dudit autre revêtement d'amortissement en polymère (50, 75).

5. Dispositif de guide d'onde électro-optique selon la revendication 4, dans lequel le premier revêtement en polymère (40, 85) comprend un polymère d'acrylate réticulé.

6. Dispositif de guide d'onde électro-optique selon la revendication 4, dans lequel (a) ledit autre revêtement d'amortissement en polymère (50, 75) a une épaisseur d'environ 2,2 à environ 3,2 µm et un indice de réfraction d'environ 1,445 à environ 1,505 ; (b) le premier revêtement en polymère (40, 85) a une épaisseur d'environ 1,0 à environ 3,0 µm et un indice de réfraction d'environ 1,53 à environ 1,61 ; (c) le noyau de polymère électro-optique (35, 70) a une épaisseur d'environ 2,4 à environ 3,8 µm et un indice de réfraction d'environ 1,54 à environ 1,62 ; et (d) ledit revêtement d'amortissement en polymère (55, 80) a une épaisseur d'environ 2,2 à environ 3,2 µm et un indice de réfraction d'environ 1,445 à environ 1,505.

7. Dispositif de guide d'onde électro-optique selon la revendication 4, comprenant en outre un second revêtement en polymère (45, 90) entre le noyau de polymère électro-optique (35, 70) et ledit revêtement d'amortissement en polymère (55, 80), le second revêtement en polymère (45) ayant un indice de réfraction qui est inférieur à l'indice de réfraction du noyau de polymère électro-optique (35, 70) et supérieur à l'indice de réfraction dudit revêtement d'amortissement en polymère (55, 80).

8. Dispositif de guide d'onde électro-optique selon la revendication 7, dans lequel (a) ledit autre revêtement d'amortissement en polymère (50, 75) a une épaisseur d'environ 2,2 à environ 3,2 µm et un indice de réfraction d'environ 1,445 à environ 1,505 ; (b) le premier revêtement en polymère (40, 85) a une épaisseur d'environ 1,0 à environ 3,0 µm et un indice de réfraction d'environ 1,53 à environ 1,61 ; (c) le noyau de polymère électro-optique (35, 70) a une épaisseur d'environ 2,4 à environ 3,8 µm et un indice de réfraction d'environ 1,54 à environ 1,62 ; (d) le second revêtement en polymère (45, 90) a une épaisseur d'environ 1,0 à environ 3,0 µm et un indice de réfraction d'environ 1,53 à environ 1,61 ; et (e) ledit revêtement d'amortissement en polymère (55, 80) a une épaisseur d'environ 2,2 à environ 3,2 µm et un indice de réfraction d'environ 1,445 à environ 1,505.

9. Dispositif de guide d'onde électro-optique selon la revendication 1 ou 2, dans lequel le noyau de polymère électro-optique (35, 70) comprend un polymère réticulé.

10. Dispositif de guide d'onde électro-optique selon la revendication 1 ou 2, comprenant en outre un substrat sur lequel est déposé ledit revêtement d'amortissement en polymère (55, 80) comprenant un polymère sol-gel organiquement modifié contenant du silicium.

11. Dispositif de guide d'onde électro-optique selon la revendication 7, dans lequel le second revêtement en polymère (45, 90) comprend un polymère sol-gel organiquement modifié contenant du silicium.

12. Dispositif de guide d'onde électro-optique selon la revendication 7, dans lequel le second revêtement en polymère (45, 90) comprend un polymère sol-gel organiquement modifié à base de dioxyde de titane et de siloxane.
